# EUROPEAN PATENT APPLICATION

(11) **EP 4 566 863 A1**
(43) Date of publication of application: **11.06.2025**
(21) Application number: 23849672.3
(22) Date of filing: 23.01.2023
(51) Int. Cl.: B60L 3/00, B60L 15/20, B60L 50/60, B60L 58/10, G08C 19/00

(54) **ELECTRIC WORK VEHICLE**

(30) Priority: 03.08.2022 JP 2022123814
(71) Applicant: Kubota Corporation, Osaka 556-8601 (JP)
(72) Inventor: TAKASE, Shunya, Sakai-shi, Osaka 590-0908 (JP)
(74) Representative: Müller-Boré & Partner Patentanwälte PartG mbB
(86) International application number: PCT/JP2023/001816
(87) International publication number: WO 2024/029104

(57) **Abstract**

An electric work vehicle is provided with: a first power storage device; a second power storage device; a motor configured to drive at least either a travel device or a work device; a data collector configured to acquire data including information on driving of the motor over time; and a relay device connected to both the second power storage device and the data collector, and switchable between a current-flow state where a current is allowed to flow between the second power storage device and the data collector and an blocked state where a current flowing between the second power storage device and the data collector is blocked. The relay device switches from the current-flow state to the blocked state in response to elapse of preset first time from a timing at which a turn-off operation is performed on a switch operation tool.

## Description

### Technical Field

The present invention relates to an electric work vehicle.

### Background Art

For example, a work vehicle disclosed in JP 2014-042508A is provided with a data collector ("access point device for the work vehicle" in this document) that collects information regarding works.

### Prior Art Document

### Patent Document

Patent Document 1: JP 2014-042508A

### Disclosure of the Invention

### Problem to be Solved by the Invention

In the data collector disclosed in JP 2014-042508A, when the main power supply for the work vehicle is stopped, the data collector executes processing for deactivating the communication function. With this, the power consumption by the communication function is reduced when the main power supply of the work vehicle is stopped.

Meanwhile, in cases of electric work vehicles, electrical components of the work vehicles are required to achieve further power saving. Also, as data collectors become more sophisticated, the amount of data they collect increases, and the power consumption of the data collectors tends to increase accordingly. In particular, a case is conceivable where, even when the work vehicle stops running, the data collector collects data at the end of the running of the work vehicle. At this time, the data collector needs to reliably collect data at the end of the running of the work vehicle and needs to suppress power consumption after the end of the running of the work vehicle.

The present invention aims to realize efficient running of a data collector in an electric work vehicle.

### Means for Solving Problem

An electric work vehicle according to the present invention relates to an electric work vehicle including:
a first power storage device storing power and switchable between a first state of supplying power and a second state of not supplying power;
a second power storage device storing power;
a motor configured to drive at least either a travel device or a work device by consuming the power stored in the first power storage device;
a data collector configured to acquire data including information on driving of the motor over time, by consuming at least either the power stored in the first power storage device or the power stored in the second power storage device;
a switch operation tool configured to accept a turn-on operation of switching a state of the first power storage device from the second state to the first state, and a turn-off operation of switching the state of the first power storage device from the first state to the second state; and
a relay device connected to both the second power storage device and the data collector, and switchable between a current-flow state where a current is allowed to flow between the second power storage device and the data collector and a blocked state where a current flowing between the second power storage device and the data collector is blocked,
the relay device switching from the current-flow state to the blocked state in response to elapse of preset first time from a timing at which the turn-off operation is performed on the switch operation tool.

According to the present invention, the data collector consumes at least either the power stored in the first power storage device or the power stored in the second power storage device. Therefore, even when the first power storage device has been switched to the second state, the data collector can continuously acquire data by consuming the power stored in the second power storage device. Also, the relay device is interposed between the data collector and the second power storage device. The relay device continues to be in the current-flow state until the timing at which the first time elapses even after the first power storage device has been switched to the second state. Therefore, when a driver performs a turn-off operation to terminate the running of the electric work vehicle, the data collector can reliably acquire data at the end of the running. Furthermore, the state of the relay device switches from the current-flow state to the blocked state at the timing at which the first time elapses. Accordingly, a current flowing between the data collector and the second power storage device is blocked, and the power supply of the data collector is directly turned off. This avoids the risk that the power stored in the second power storage device will continue to be consumed uselessly by the data collector after the electric work vehicle has stopped running. As a result, efficient running of the data collector is realized in the electric work vehicle.

In the present invention, preferably, the data collector includes a transmitter capable of transmitting the data outside, and
the transmitter transmits the data outside during a period from the timing at which the turn-off operation is performed on the switch operation tool to a timing at which the first time elapses.

According to this configuration, even when the driver operates the switch operation tool to turn off and terminate the running of the electric work vehicle, the data collector can acquire data without leaving any data behind and transmit the acquired data outside by the timing at which the first time elapses. This allows, for example, an external management computer to acquire data until the end of running of the electric work vehicle without delay and use it for failure sign analysis, diagnosis, and the like, for example.

In the present invention, preferably, the electric work vehicle further includes
a controller capable of outputting a control signal to the relay device,
wherein the controller outputs the control signal to switch the relay device from the current-flow state to the blocked state at a timing at which the first time elapses from the timing at which the turn-off operation is performed on the switch operation tool.

According to this configuration, since the controller outputs the control signal to the relay device, the relay device is accurately switched from the current-flow state to the blocked state based on the control signal.

In the present invention, preferably, the first power storage device switches from the first state to the second state at a timing at which second time elapses from the timing at which the turn-off operation is performed on the switch operation tool, the second time being shorter than the first time.

According to this configuration, even when a turn-off operation is performed by the driver, the first power storage device is not immediately switched from the first state to the second state but switches from the first state to the second state at the timing at which the second time elapses. Therefore, at the deactivation of the running of the electric work vehicle, instruments such as the motor can execute preparation processing for terminating the running.

In the present invention, preferably, the second power storage device has an output voltage lower than an output voltage of the first power storage device,
the electric work vehicle further comprises a voltage converter connected to both the first power storage device and the second power storage device so that a current can flow therebetween, the voltage converter being capable of receiving the power from the first power storage device, stepping down a voltage of the power, and transmitting the resulting power to the second power storage device, and
the second power storage device is chargeable with the power received from the first power storage device via the voltage converter.

According to this configuration, the second power storage device can be charged with the power from the first power storage device. This avoids the risk that the power of the second power storage device becomes insufficient, and the data collector can reliably acquire data at the end of the running of the electric work vehicle.

In the present invention, preferably, the voltage converter blocks a current flowing between the first power storage device and the second power storage device in response to the state of the first power storage device being switched from the first state to the second state.

According to this configuration, the power stored in the first power storage device is no longer consumed by the second power storage device during the second state. With this, the running of the first power storage device is reliably deactivated after the deactivation of the running of the electric work vehicle.

In the present invention, preferably, the electric work vehicle further includes
a driving section including a seat on which a driver is to sit,
and the motor and the first power storage device are provided in front of the seat, and the data collector is provided behind the seat.

The motor and the first power storage device tend to generate heat in response to the running of the electric work vehicle. According to this configuration, the data collector is provided behind the seat and is located apart from the motor and the first power storage device, which are provided in front of the seat. With this, the data collector is less susceptible to the heat generated by the motor and the first power storage device.

### Brief Description of the Drawings

FIG. 1 is a left side view of an electric tractor.
FIG. 2 is a left side view showing a layout of an inverter and the like.
FIG. 3 is a diagram showing a flow of motive power transmission.
FIG. 4 is a block diagram showing a configuration of control of an electric work vehicle.
FIG. 5 is a logic graph diagram showing behaviors of instruments based on the operation of a switch operation tool.

### Best Mode for Carrying out the Invention

An embodiment for implementing the present invention will be described with reference to the drawings. Note that, in the following description, unless otherwise stated, the direction of an arrow "F" in the drawings refers to the "front" direction, the direction of an arrow "B" refers to the "rear" direction, the direction of an arrow "L" refers to the "left" direction, and the direction of an arrow "R" refers to the "right" direction. Also, the direction of an arrow "U" in the drawings refers to the "up" direction, and the direction of an arrow "D" refers to the "down" direction.

### [Overall Configuration of Electric Work Vehicle]

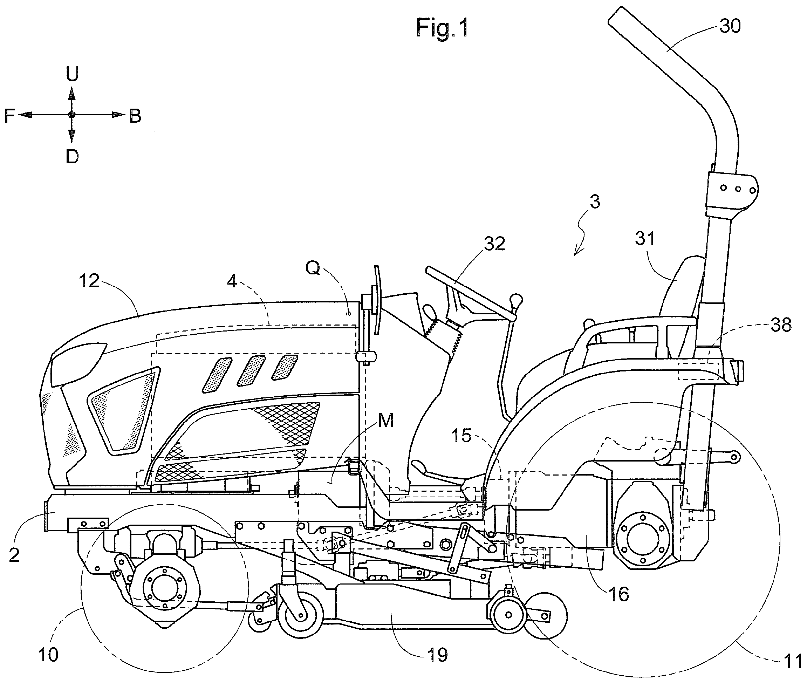

The following describes an electric work vehicle according to the present embodiment. FIG. 1 shows an electric tractor as an example of an electric work vehicle. As shown in FIG. 1, the electric tractor includes left and right front wheels 10, left and right rear wheels 11, and a cover member 12.

The electric tractor also includes a body frame 2 and a driving section 3. The body frame 2 is supported by the left and right front wheels 10 and the left and right rear wheels 11.

The cover member 12 is disposed in a front portion of the body of the electric tractor. The driving section 3 is provided behind the cover member 12. In other words, the cover member 12 is provided in front of the driving section 3.

The driving section 3 includes a protective frame 30, a seat 31, and a steering wheel 32. A driver can sit on the seat 31. Accordingly, the driver can get on the driving section 3. The left and right front wheels 10 are used to change the orientation thereof through the operation of the steering wheel 32. The driver can perform various driving operations in the driving section 3.

The electric tractor includes a travel battery unit 4. Also, the cover member 12 is pivotable about an opening/closing axis Q extending in the left-right direction of the body. Accordingly, the cover member 12 is openable and closeable. When the cover member 12 is closed, the travel battery unit 4 is covered by the cover member 12. The travel battery unit 4 corresponds to the "first power storage device" of the present invention.

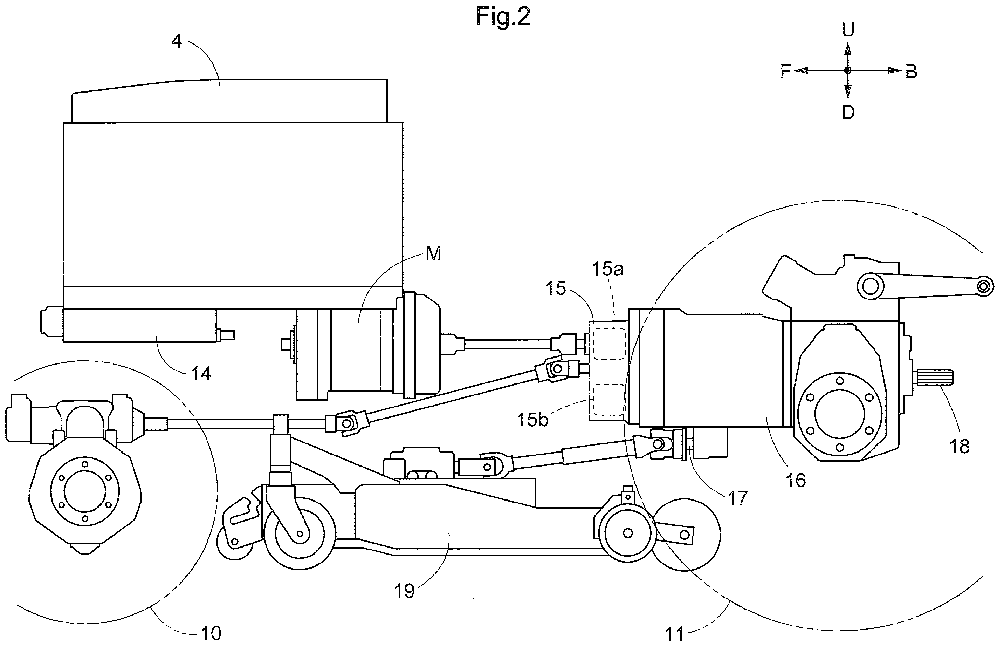

As shown in FIG. 2, the electric tractor includes an inverter 14 and a motor M. The travel battery unit 4 supplies power to the inverter 14. The inverter 14 converts DC power supplied from the travel battery unit 4 into AC power, and supplies the AC power to the motor M. The motor M is driven by the AC power supplied from the inverter 14. In other words, the motor M is driven by consuming the power stored in the travel battery unit 4.

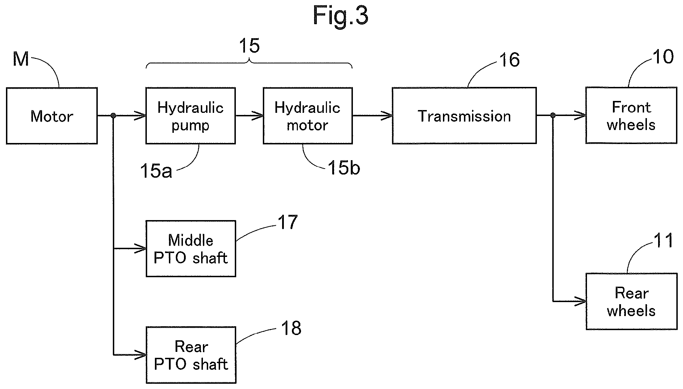

As shown in FIGS. 2 and 3, the electric tractor includes a hydraulic static transmission 15 and a transmission 16. As shown in FIG. 3, the hydraulic static transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. Note that the hydraulic static transmission 15 is configured to change the speed of the rotational motive power between the hydraulic pump 15a and the hydraulic motor 15b. Also, the hydraulic static transmission 15 is able to change the transmission ratio in a stepless manner.

The rotational motive power output from the hydraulic motor 15b is transmitted to the transmission 16. The rotational motive power transmitted to the transmission 16 is subjected to speed change by a gear transmission mechanism included in the transmission 16, and is distributed to the left and right front wheels 10 and the left and right rear wheels 11. Thus, the left and right front wheels 10 and the left and right rear wheels 11 are driven.

As shown in FIGS. 2 and 3, the electric tractor also includes a middle PTO shaft 17 and a rear PTO shaft 18. The rotational motive power output from the motor M is distributed to the hydraulic pump 15a, the middle PTO shaft 17, and the rear PTO shaft 18. With this, the middle PTO shaft 17 and the rear PTO shaft 18 are rotated.

If a work device is connected to the middle PTO shaft 17 or the rear PTO shaft 18, the work device is driven by the rotational motive power transmitted by the middle PTO shaft 17 or the rear PTO shaft 18. For example, as shown in FIG. 2, in the present embodiment, a mowing device 19 is connected to the middle PTO shaft 17. The mowing device 19 is driven by the rotational motive power transmitted by the middle PTO shaft 17.

The mowing device 19 corresponds to the "work device" of the present invention. The left and right front wheels 10 and the left and right rear wheels 11 correspond to the "travel device" of the present invention. Thus, the motor M drives the mowing device 19, the left and right front wheels 10, and the left and right rear wheels 11.

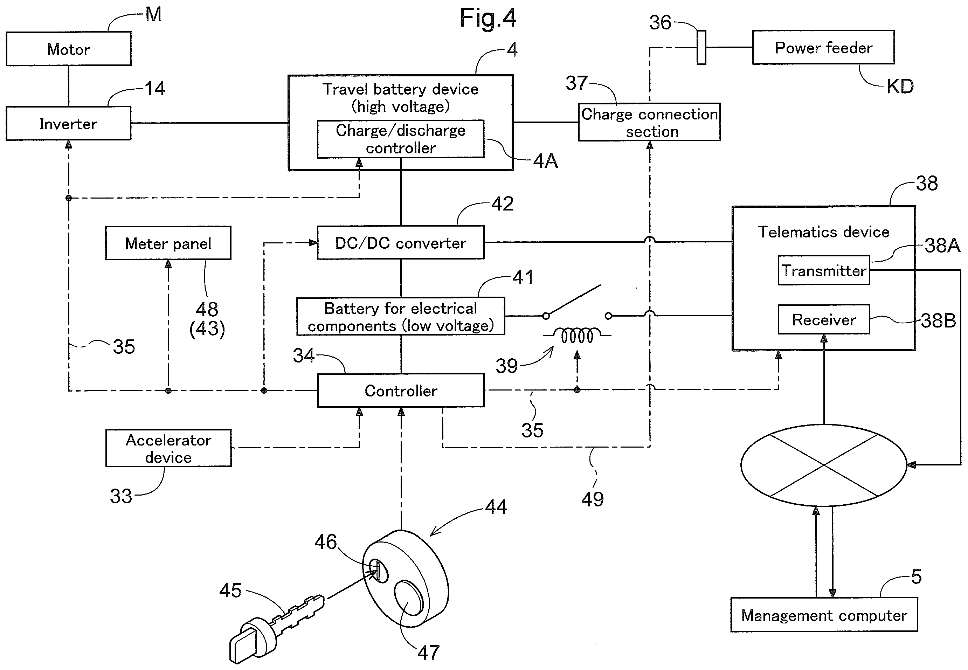

As shown in FIG. 1, a telematics device 38 is provided behind the seat 31. The telematics device 38 collects data regarding detected values of the electrical components of the electric tractor and detected values of sensors, and transfers the collected data to an external management computer 5 (see FIG. 4). The telematics device 38 corresponds to the "data collector" of the present invention. The telematics device 38 will be described in detail later. The motor M and the travel battery unit 4 are provided in front of the seat 31, and the telematics device 38 is provided behind the seat 31.

### [Configuration for Controlling Motor]

As shown in FIG. 4, the control configuration of the motor M includes an accelerator device 33, a controller 34 that controls the driving of the motor M, and the inverter 14. The controller 34 is the core element of the control system of the electric work vehicle and is configured as a collection of a plurality of ECUs. The accelerator device 33 is provided near the steering wheel 32. Although not shown in the figure, the accelerator device 33 includes a lever that can be pivoted and operated, and a potentiometer that detects the amount of pivoting operation of the lever. The accelerator device 33 is connected to the controller 34. The controller 34 is connected to the inverter 14 via a signal harness 35. The controller 34 outputs command signals to the inverter 14 in response to commands from the accelerator device 33. The inverter 14 controls the output of the motor M by adjusting the power (such as a voltage value, a frequency, and a current value) to be supplied to the motor M from the travel battery unit 4 in response to the command signal from the controller 34.

The travel battery unit 4 is, for example, a lithium-ion battery. Although not shown in the figure, the travel battery unit 4 is constituted by a number of small low-voltage unit batteries (cells) stacked together. The output voltage of the travel battery unit 4 is, for example, 250 volts. The unit batteries (cells) are stored in a storage case. These unit batteries (cells) are sealed by the storage case. The travel battery unit 4 also includes a charge/discharge controller 4A. The charge/discharge controller 4A has multiple control modes, which will be described in detail later. The control modes of the charge/discharge controller 4A include a charge mode, a discharge mode, and a non-operation mode.

The charge/discharge controller 4A may be, for example, a power module or PLC (programmable logic controller) including a microcomputer that executes a program based on a control signal from the controller 34, or may be a relay circuit that operates based on an electrical signal from the controller 34.

The electric tractor is provided with, in addition to the travel battery unit 4, a battery 41 for electrical components that supplies power to the controller 34 and other electrical components. The battery 41 for electrical components is, for example, a lead-battery. The battery 41 for electrical components supplies power of a low voltage (e.g., 12 volts) to drive the electrical components. The output voltage of the battery 41 for electrical components is lower than the output voltage of the travel battery unit 4. The battery 41 for electrical components corresponds to the "second power storage device" of the present invention.

The battery 41 for electrical components is charged with power supplied from the travel battery unit 4 via a DC/DC converter 42. The DC/DC converter 42 can step down the voltage of the travel battery unit 4 to the voltage of the battery 41 for electrical components, and then supply the resulting power to the electrical components such as the telematics device 38. The DC/DC converter 42 can also supply power to the battery 41 for electrical components. In other words, the DC/DC converter 42 is connected to both the travel battery unit 4 and the battery 41 for electrical components so that a current can flow therebetween, and is capable of receiving power from the travel battery unit 4, stepping down the voltage of the power, and transmitting the resulting power to the battery 41 for electrical components. Thus, the travel battery unit 4 can supply power to the battery 41 for electrical components and can charge the battery 41 for electrical components. In other words, the battery 41 for electrical components is chargeable with power received from the travel battery unit 4 via the DC/DC converter 42. The DC/DC converter 42 corresponds to the "voltage converter" of the present invention.

A switch operation tool 44 is provided in the driving section 3. The switch operation tool 44 includes an insertion slot 46 into which a portable operation key 45 can be inserted and mounted, and a switch 47 of a push-button type that can be manually pushed. In response to the switch 47 being pushed with the operation key 45 inserted and mounted in the insertion slot 46, the control mode of the charge/discharge controller 4A switches from the non-operation mode to the discharge mode. The pushing operation of the switch 47 with the operation key 45 inserted and mounted in the insertion slot 46 is referred to as a "turn-on operation" of the switch operation tool 44. Similar to a common vehicle key, the operation key 45 functions as a key that can only be identified by the corresponding work vehicle.

An operation panel 43 includes a meter panel 48. The meter panel 48 displays, for example, the travel status of the vehicle body, the work status, battery information (such as charge amount and temperature), and the like. The meter panel 48 is connected to the controller 34, and the controller 34 controls the operation of the meter panel 48.

The controller 34, the inverter 14, the travel battery unit 4, the DC/DC converter 42, the meter panel 48, the telematics device 38, a relay device 39, and the like are connected to each other via the signal harness 35 of the CAN (Controller Area Network) type so as to be able to perform data communication. Communication is performed between the controller 34 and a charge connection section 37 via a harness 49 for charging communication. Information on whether or not a power supply connector 36 is connected to the charge connection section 37, information on the charging current required on the work vehicle side, and the like are transmitted. Signals can also be communicated between the charge connection section 37 and a power feeder KD. Also, information on the operation of the switch operation tool 44 is input to the controller 34. The charge connection section 37 may also be connected to the controller 34 and the like via the signal harness 35 so as to be able to perform data communication.

In response to the power supply connector 36 being connected to the charge connection section 37 and the operation key 45 being inserted into the insertion slot 46, the controller 34 transmits a control signal for charging to the charge/discharge controller 4A via the signal harness 35. The control mode of the charge/discharge controller 4A is then switched to the charge mode, and the travel battery unit 4 is charged by the power feeder KD. At this time, the travel battery unit 4 is not discharged to the motor M.

In response to the turn-on operation of the switch operation tool 44 being performed with the power supply connector 36 not connected to the charge connection section 37, the controller 34 transmits a control signal for charging to the charge/discharge controller 4A via the signal harness 35. Then, the control mode of the charge/discharge controller 4A switches from the non-operation mode to the discharge mode.

In response to the control mode of the charge/discharge controller 4A being switched to the discharge mode, the travel battery unit 4 can be discharged to the motor M. At this time, the travel battery unit 4 is in a first state of supplying power. When the control mode of the charge/discharge controller 4A is the discharge mode, the DC/DC converter 42 steps down the voltage of the travel battery unit 4 to the voltage of the battery 41 for electrical components, then supplies the resulting power to the electrical components such as the telematics device 38, and charges the battery 41 for electrical components.

In response to the operation key 45 being removed from the insertion slot 46, the controller 34 transmits a control signal for stopping charging/discharging to the charge/discharge controller 4A via the signal harness 35. Then, the control mode of the charge/discharge controller 4A is switched to the non-operation mode. The operation of removing the operation key 45 from the insertion slot 46 is referred to as a "turn-off operation" of the switch operation tool 44.

In response to the control mode of the charge/discharge controller 4A being switched to the non-operation mode, the travel battery unit 4 can no longer be discharged to the motor M. At this time, the travel battery unit 4 is in a second state of not supplying power. At this time, the travel battery unit 4 is not charged by the power feeder KD. When the control mode of the charge/discharge controller 4A is the non-operation mode, power supply from the DC/DC converter 42 to the electrical components such as the telematics device 38, and the battery 41 for electrical components is also stopped. That is, in response to the state of the travel battery unit 4 being switched from the first state to the second state, the DC/DC converter 42 blocks a current flowing between the travel battery unit 4 and the battery 41 for electrical components.

In this way, the travel battery unit 4 is switchable between the first state of supplying power and the second state of not supplying power. The state of the travel battery unit 4 switches from the second state to the first state in response to the switch operation tool 44 being turned on, and the state of the travel battery unit 4 switches from the first state to the second state in response to the switch operation tool 44 being turned off. In other words, the switch operation tool 44 accepts the turn-on operation of switching the state of the travel battery unit 4 from the second state to the first state, and the turn-off operation of switching the state of the travel battery unit 4 from the first state to the second state.

The telematics device 38 acquires data including information on the motor M, the inverter 14, the travel battery unit 4, the DC/DC converter 42, and the like via the signal harness 35 over time. The information includes, for example, the amount of charge, the amount of discharge, the temperature of generated heat, alarm history, and abnormality history of the travel battery unit 4, and the like. The information also includes, for example, the output value of the motor M, the temperature of the motor M, the command value of the inverter 14, the temperatures of the inverter 14 and the DC/DC converter 42, the alarm history and abnormality history in the controller 34, and the like.

The telematics device 38 includes a transmitter 38A and a receiver 38B. The information acquired by the telematics device 38 is transmitted from the transmitter 38A to the external management computer 5 via the wireless Internet network. The transmitter 38A executes transmitting processing at intervals of 15 minutes, for example. Based on the information received from the telematics device 38, the management computer 5 performs diagnosis regarding whether or not the tractor has any failure, and estimates the lifetime prediction of the travel battery unit 4, the inverter 14, and the like, for example. The receiver 38B is used, for example, to receive a response signal from the management computer 5 and an update program from the management computer 5, via a wireless Internet network.

Note that the management computer 5 may be, for example, a portable tablet device, a smartphone, or smartwatch.

Although not described in detail, the telematics device 38 is also used as a positioning device that receives positioning signals from satellites (not shown) used in the GNSS (Global Satellite Navigation System, e.g., GPS, GLONASS, Galileo, QZSS, BeiDou, etc.). Note that in order to complement the satellite navigation, inertial measurement devices such as a gyro accelerometer sensor and a magnetic direction sensor may be incorporated into the telematics device 38, for example.

As shown in FIG. 1, the telematics device 38 is provided behind the seat 31. The motor M and the travel battery unit 4 tend to generate heat in response to the running of the electric work vehicle. If the temperature of the telematics device 38 becomes high due to the heat generated by the motor M and the travel battery unit 4, the telematics device 38 may stop running to prevent thermal runaway. With the configuration of the present embodiment, the telematics device 38 is less susceptible to the heat generated by the motor M and the travel battery unit 4. Also, the telematics device 38 is misaligned to any one of left and right sides with respect to the seat 31. For example, the telematics device 38 is located at a right-side position of the body with respect to the right side of the seat 31. This reduces the risk that radio wave communications in the transmitter 38A and the receiver 38B is shielded by the seat 31, compared to a configuration in which the telematics device 38 is provided immediately behind the seat 31.

The telematics device 38 can receive power from the travel battery unit 4 via the DC/DC converter 42. The telematics device 38 can also receive power from the battery 41 for electrical components. That is to say, the telematics device 38 can receive power from both the travel battery unit 4 and the battery 41 for electrical components. If the control mode of the charge/discharge controller 4A is switched to the non-operation mode while the transmitter 38A and the receiver 38B of the telematics device 38 are communicating with the management computer 5, the telematics device 38 cannot receive power from the travel battery unit 4. Even in such a case, the telematics device 38 can continue the communication processing in the transmitter 38A and the receiver 38B without interruption, by receiving power from the battery 41 for electrical components.

Thus, the telematics device 38 acquires data including information on the driving of the motor M over time, by consuming at least either the power stored in the travel battery unit 4 or the power stored in the battery 41 for electrical components.

The relay device 39 is provided at a mid-way position of a wiring connected between the battery 41 for electrical components and the telematics device 38. The relay device 39 may be, for example, a power module or PLC (programmable logic controller) including a microcomputer that executes a program based on a control signal from the controller 34, or may be a relay circuit that operates based on an electrical signal from the controller 34. The relay device 39 is connected to both the battery 41 for electrical components and the telematics device 38. Also, the relay device 39 is switchable between a current-flow state where a current is allowed to flow between the battery 41 for electrical components and the telematics device 38, and a blocked state where a current flowing between the battery 41 for electrical components and the telematics device 38 is blocked, based on a control signal from the controller 34.

### [Regarding Logic Processing Relating to Behaviors of Instruments Based on Operation of Switch Operation Tool]

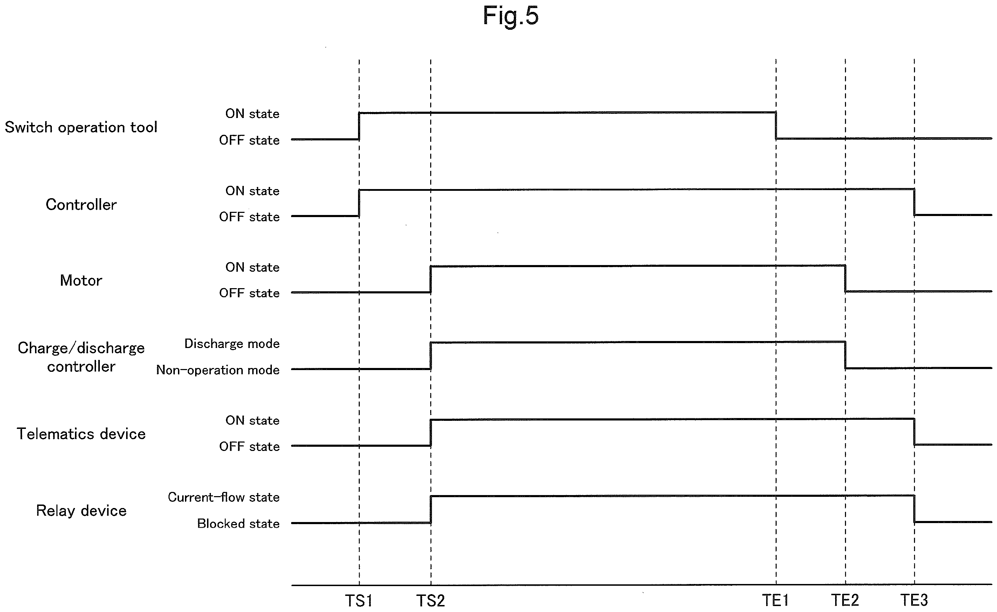

The behaviors of the devices based on the operation of the switch operation tool 44 is described with reference to FIG. 5. The logic graph diagram shown in FIG. 5 shows the states of the switch operation tool 44, the controller 34, the travel battery unit 4, the motor M, the telematics device 38, and the relay device 39.

An ON state of the switch operation tool 44 shown in FIG. 5 is a condition in which the switch operation tool 44 is turned on. If this condition is not met, the switch operation tool 44 is in an OFF state.

The behaviors of the devices when activating the drive device of the tractor will be described. At timing TS1 shown in FIG. 5, the switch operation tool 44 is turned on and the state of the switch operation tool 44 is switched from the OFF state to the ON state. At the same time, the state of the controller 34 is switched from the OFF state to the ON state, and the controller 34 first executes activation processing. The activation processing of the controller 34 means, for example, initialization processing of an integrated circuit mounted on the controller 34, and the like.

At timing TS2 shown in FIG. 5, the activation processing of the controller 34 is complete. Upon completion of the activation processing of the controller 34, the controller 34 outputs a control signal for discharging to the charge/discharge controller 4A. Then, the control mode of the charge/discharge controller 4A of the travel battery unit 4 is switched from the non-operation mode to the discharge mode. Note that a configuration is also possible in which when the power supply connector 36 is connected to the charge connection section 37, the controller 34 outputs a control signal for charging to the charge/discharge controller 4A, and the control mode of the charge/discharge controller 4A is switched from the non-operation mode to the charge mode.

In response to the control mode of the charge/discharge controller 4A being switched from the non-operation mode to the discharge mode, the motor M is also switched from the OFF state to the ON state, so the motor M is able to be driven. Note that when the control mode of the charge/discharge controller 4A is switched from the non-operation mode to the charge mode, the motor M is maintained in the OFF state.

In response to the control mode of the charge/discharge controller 4A being switched from the non-operation mode to the discharge mode, the telematics device 38 can receive power from the travel battery unit 4, and the state of the telematics device 38 is switched from the OFF state to the ON state. The ON state of the telematics device 38 shown in FIG. 5 is a state where the telematics device 38 is operating. The OFF state of the telematics device 38 shown in FIG. 5 is a state where the telematics device 38 is not supplied with power.

Upon completion of the activation processing of the controller 34, the controller 34 also outputs a control signal to the relay device 39, and the relay device 39 is switched from the blocked state to the current-flow state. In response to the state of the relay device 39 being switched from the blocked state to the current-flow state, the telematics device 38 can receive power from the battery 41 for electrical components. Therefore, even if the control mode of the charge/discharge controller 4A is switched to the non-operation mode and the telematics device 38 cannot receive power from the travel battery unit 4, the telematics device 38 can continue to operate with power from the battery 41 for electrical components.

In this way, the state of the controller 34 is switched from the OFF state to the ON state at the same time as the state of the switch operation tool 44 is switched from the OFF state to the ON state. Then, at timing TS2, at which preset time has elapsed from timing TS1, at which the states of the switch operation tool 44 and the controller 34 have been switched to the ON state, the activation processing of the controller 34 is complete. At timing TS2, the control mode of the charge/discharge controller 4A is switched from the non-operation mode to the discharge mode, and the state of the motor M is switched from the OFF state to the ON state. Also, at timing TS2, the state of the relay device 39 is switched from the blocked state to the current-flow state, and the state of the telematics device 38 is switched from the OFF state to the ON state.

Next, the behaviors of the devices when terminating the running of the drive device of the tractor will be described. At timing TE1 shown in FIG. 5, when the switch operation tool 44 is turned off, the state of the switch operation tool 44 is switched from the ON state to the OFF state. At this time, the controller 34 transmits a control signal for non-operation to the charge/discharge controller 4A via the signal harness 35. The controller 34 also outputs a control signal for non-operation to the inverter 14 and the meter panel 48. Then, the charge/discharge controller 4A performs processing for stopping the discharge of the travel battery unit 4. The inverter 14 also performs discharge processing of the electric charge stored in an internal capacitor, and other processing, for example. In other words, from timing TE1 to timing TE2 shown in FIG. 5, the charge/discharge controller 4A and the inverter 14 perform deactivation processing for terminating the running.

At timing TE2 shown in FIG. 5, the deactivation processing of the charge/discharge controller 4A and the inverter 14 is complete. At that time, the control mode of the charge/discharge controller 4Ais switched from the discharge mode to the non-operation mode, and the state of the motor M is switched from the ON state to the OFF state. Time elapsed from timing TE1 to timing TE2 corresponds to the "second time" of the present invention. The travel battery unit 4 is switched from the first state to the second state at timing TE2, at which the second time elapses from timing TE1, at which the switch operation tool 44 is turned off. The second time is set to 1 to 10 minutes, for example.

Note that the current-flow state of the relay device 39 continues even after the control mode of the charge/discharge controller 4A has been switched to the non-operation mode. Therefore, the telematics device 38 continues to operate based on power from the battery 41 for electrical components. At this time, the telematics device 38 transmits information acquired and stored over time to the external management computer 5 using the transmitter 38A. In other words, the telematics device 38 transmits the stored information to the management computer 5 during the period from timing TE1 to timing TE3.

Time elapsed from timing TE1 to timing TE3 corresponds to the "first time" of the present invention. In other words, the relay device 39 is switched from the current-flow state to the blocked state when the preset first time elapses from timing TE1, at which the switch operation tool 44 is turned off. The transmitter 38A of the telematics device 38 transmits data outside during the period from timing TE1, at which the switch operation tool 44 is turned off, to timing TE3, at which the first time elapses. The first time is set to 5 to 15 minutes, for example. Note that the second time is set to be shorter than the first time.

The transmitting processing of the telematics device 38 is complete until timing TE3 shown in FIG. 5 elapses. At timing TE3, the controller 34 outputs a control signal to the relay device 39, and the state of the relay device 39 is switched from the current-flow state to the blocked state. In other words, the controller 34 outputs a control signal to switch the relay device 39 from the current-flow state to the blocked state at timing TE3, at which the first time elapses from timing TE1, at which the switch operation tool 44 is turned off. The state of the telematics device 38 is switched from the ON state to the OFF state in response to interruption of the power from the battery 41 for electrical components.

Also, at timing TE3, when the state of the telematics device 38 is switched from the ON state to the OFF state, the controller 34 executes the deactivation processing and the state of the controller 34 is switched from the ON state to the OFF state.

### [Other Embodiments]

The present invention is not limited to the configurations exemplified in the above embodiment, and other representative embodiments of the present invention will be given below.
(1) In the above-described embodiment, the motor M rotates and drives both the travel device (left and right front wheels 10 and left and right rear wheels 11) and the work device (mowing device 19), but the present invention is not limited to this embodiment. The motor M may be configured to drive one of the travel device and the work device.
(2) In the above-described embodiment, the travel battery unit 4 is exemplified as the first power storage device, and a lithium-ion battery is exemplified as the travel battery unit 4, but the present invention is not limited to this embodiment. For example, the first power storage device may be a solid-state battery.
(3) In the above-described embodiment, the battery 41 for electrical components is exemplified as the second power storage device, and a lead battery is exemplified as the battery 41 for electrical components, but the present invention is not limited to this embodiment. For example, the second power storage device may be a lithium-ion battery or an electric double-layer capacitor.
(4) In the above-described embodiment, the battery 41 for electrical components can be charged with power received from the travel battery unit 4 via the DC/DC converter 42, but the present invention is not limited to this embodiment. For example, the battery 41 for electrical components may be configured not to receive power from the travel battery unit 4.
(5) In the above-described embodiment, the telematics device 38 is provided behind the seat 31, but the present invention is not limited to this embodiment. For example, the telematics device 38 may be provided at an upper end portion of the protective frame 30. In this case, the telematics device 38 is provided above the seat 31. Alternatively, the telematics device 38 may be provided in an upper portion of the cover member 12.
(6) In the embodiment described above with reference to FIG. 5, the controller 34 outputs control signals to the relay device 39 and the charge/discharge controller 4A when the switch operation tool 44 is turned off at timing TE1, but the present invention is not limited to this embodiment. For example, instead of the controller 34, a counter circuit may be configured to switch the charge/discharge controller 4A to the non-operation mode at timing TE2, at which the second time elapses from timing TE1. The counter circuit may also be configured to switch the relay device 39 to the blocked state at timing TE3, at which the first time elapses from timing TE1.
(7) In the above-described embodiment, the mowing device 19 is exemplified as the work device. The present invention is not limited to this embodiment and examples of the work device may include a cultivator, a seeding device, a planter, a fertilizing device, a leaf cutter, a spreader, a baler, a mulcher, a stone picker, a rotary rake, a tedder, a traction-type harvest sorting device, a plucking device, an intertillage management device, and a ridging device.
(8) In the above-described embodiment, an electric tractor is shown as the electric work vehicle, but the present invention is not limited to this embodiment. Examples of the electric work vehicle may include an electric rice transplanter, an electric spreader, an electric sprayer, an electric combine, an electric mower, an electric intertillage management machine, an electric wheel loader, and an electric backhoe.

Note that the configurations disclosed in the above-described embodiments (including the other embodiments, the same applies hereinafter) can be applied in combination with the configurations disclosed in other embodiments, as long as no contradiction arises. The embodiments disclosed in the present specification are examples, and the embodiments of the present invention are not limited thereto and can be modified as appropriate within the scope that does not depart from the purpose of the present invention.

### Industrial Applicability

The present invention is applicable to an electric work vehicle.

### Description of Reference Signs

3: driving section
4: travel battery unit (first power storage device)
10: front wheel (travel device)
11: rear wheel (travel device)
19: mowing device (work device)
31: seat
34: controller
38: telematics device (data collector)
38A: transmitter
39: relay device
41: battery for electrical components (second power storage device)
42: DC/DC converter (voltage converter)
44: switch operation tool
M: motor
TE1: timing at which turn-off operation is performed
TE2: timing at which second time elapses
TE3: timing at which first time elapses

## Claims

1. An electric work vehicle comprising:
a first power storage device storing power and switchable between a first state of supplying power and a second state of not supplying power;
a second power storage device storing power;
a motor configured to drive at least either a travel device or a work device by consuming the power stored in the first power storage device;
a data collector configured to acquire data including information on driving of the motor over time, by consuming at least either the power stored in the first power storage device or the power stored in the second power storage device;
a switch operation tool configured to accept a turn-on operation of switching a state of the first power storage device from the second state to the first state, and a turn-off operation of switching the state of the first power storage device from the first state to the second state; and
a relay device connected to both the second power storage device and the data collector, and switchable between a current-flow state where a current is allowed to flow between the second power storage device and the data collector and a blocked state where a current flowing between the second power storage device and the data collector is blocked,
the relay device switching from the current-flow state to the blocked state in response to elapse of preset first time from a timing at which the turn-off operation is performed on the switch operation tool.

2. The electric work vehicle according to claim 1,
wherein the data collector includes a transmitter capable of transmitting the data outside, and
the transmitter transmits the data outside during a period from the timing at which the turn-off operation is performed on the switch operation tool to a timing at which the first time elapses.

3. The electric work vehicle according to claim 1 or 2, further comprising
a controller capable of outputting a control signal to the relay device,
wherein the controller outputs the control signal to switch the relay device from the current-flow state to the blocked state at a timing at which the first time elapses from the timing at which the turn-off operation is performed on the switch operation tool.

4. The electric work vehicle according to any one of claims 1 to 3,
wherein the first power storage device switches from the first state to the second state at a timing at which second time elapses from the timing at which the turn-off operation is performed on the switch operation tool, the second time being shorter than the first time.

5. The electric work vehicle according to any one of claims 1 to 4,
wherein the second power storage device has an output voltage lower than an output voltage of the first power storage device,
the electric work vehicle further comprises a voltage converter connected to both the first power storage device and the second power storage device so that a current can flow therebetween, the voltage converter being capable of receiving the power from the first power storage device, stepping down a voltage of the power, and transmitting the resulting power to the second power storage device, and
the second power storage device is chargeable with the power received from the first power storage device via the voltage converter.

6. The electric work vehicle according to claim 5,
wherein the voltage converter blocks a current flowing between the first power storage device and the second power storage device in response to the state of the first power storage device being switched from the first state to the second state.

7. The electric work vehicle according to any one of claims 1 to 6, further comprising
a driving section including a seat on which a driver is to sit,
wherein the motor and the first power storage device are provided in front of the seat, and the data collector is provided behind the seat.
